Europäisches Patentamt

European Patent Office

Office européen des brevets

(11) Numéro de publication: **0 311 485**
**A1**

## DEMANDE DE BREVET EUROPEEN

(21) Numéro de dépôt: 88402439.9

(51) Int. Cl.⁴: **G 11 B 11/10**

(22) Date de dépôt: 27.09.88

(30) Priorité: 05.10.87 FR 8713738

(43) Date de publication de la demande:
12.04.89 Bulletin 89/15

(84) Etats contractants désignés: **DE FR GB IT NL**

(71) Demandeur: **BULL S.A.**
**121 avenue de Malakoff P.B. 193.16**
**F-75764 Paris Cédex 16 (FR)**

(72) Inventeur: **Bernstein, Pierre**
**11, rue du Haut-Boutron Saint-Germain-en-Laye**
**F-78640 Neauphle-le-Château (FR)**

(74) Mandataire: **Gouesmel, Daniel et al**
**25, avenue de la Grande-Armée PC 4X018**
**F-75016 Paris (FR)**

(54) Dispositif asservi de lecture optique et d'écriture magnétique d'un support d'informations.

(57) Dispositif qui comprend un transducteur (TMI₁) d'écriture des informations disposé sur un patin (PATI₁) volant au-dessus du support, une source de lumière polarisée (SLI₁), des moyens optiques (MFOCI₁) de focalisation du faisceau incident (Fᵢ) provenant de la source, sur le support, des moyens de détection de l'angle de rotation du plan de polarisaton de la lumière.

Selon l'invention, ce dispositif est caractérisé en ce qu'il comprend des moyens (MDPI₁) pour mesurer le déplacement du faisceau incident (Fᵢ₁) par rapport à une position de référence (POSREF) prédéterminée, émettant un signal envoyé à des moyens de commande (COMI₁) envoyant eux-mêmes des signaux de commande fonction de ce déplacement à des moyens de correction (MCPI₁) de la position du faisceau incident qui le ramènent dans la position de référence (POSREF).

Applicable aux mémoirs à disques magnétooptiques.

FIG. 4

EP 0 311 485 A1

**Description**

## DISPOSITIF ASSERVI DE LECTURE OPTIQUE ET D'ECRITURE MAGNETIQUE D'UN SUPPORT D'INFORMATIONS

La présente invention concerne un dispositif asservi de lecture optique et d'écriture magnétique d'un support d'informations. Elle est notamment applicable à la lecture et à l'écriture d'informations sur les disques magnétiques d'une mémoire à disque magnétooptique.

Les mémoires à disques magnétooptiques sont des mémoires où les informations sont enregistrées sur des disques magnétiques et lues par des dispositifs optoélectroniques. L'évolution technologique est telle que l'on tend à utiliser de telles mémoires car elles permettent d'obtenir des densités radiales de l'ordre de quelques milliers de pistes par centimètre et des densités longitudinales de 10.000 informations par centmètre.

Leur mode de fonctionnement repose sur l'effet magnétooptique qui concerne l'interaction d'une lumière polarisée rectiligne avec l'état magnétique du matériau constituant la couche d'enregistrement des disques magnétiques. La lecture des informations est effectuée par un dispositif optélectronique comprenant un dispositif optique de focalisation plus ou moins complexe associé à des transducteurs photoélectroniques et des circuits d'amplification des signaux délivrés par ces transducteurs. Ces dispositifs optoélectroniques permettent d'observer à un moment donné, en un endroit donné, une face d'un disque au moyen d'un faisceau de lumière polarisé et de délivrer un signal électrique dont la tension (ou le courant) est fonction de la valeur des informations situées à cet endroit. Le brevet français 2.514.913 déposé par la Compagnie Internationale pour l'Informatique CII HONEYWELL BULL le 16 octobre 1981 donne de plus amples détails sur l'effet magnétooptique et sur la manière dont peuvent être lues les informations contenues sur des disques magnétiques d'une mémoire magnétooptique. (Le brevet US correspondant est le brevet 4,510,544).

Plus précisément, le dispositif de lecture optoélectronique décrit dans le brevet mentionné ci-dessus comprend :

- une source lumineuse émettant un faisceau de lumière polarisé sur la surface du disque magnétooptique en un endroit déterminé de celui-ci dont l'interaction avec l'état magnétique du disque en cet endroit produit une rotation du plan de polarisation de la lumière,

- des moyens optiques pour focaliser le faisceau sur la surface du disque, dont la trace sur celui-ci forme un spot lumineux et qui est réfléchi par le disque puis transmis par ceux-ci à un élément séparateur séparant le faisceau indicent du faisceau réfléchi,
- et des moyens de détection de l'angle de rotation du plan de polarisation de la lumière délivrant un signal électrique dont la tension (ou le courant) est fonction de la valeur de l'information située à cet endroit.

Ainsi qu'il est indiqué dans ce même brevet, les moyens de focalisation, ainsi que l'élément séparateur et les moyens de détection de l'angle de rotation du plan de polarisation sont disposés sur une plate-forme pouvant se déplacer par rapport aux pistes du disque, plate-forme qui comprend un bras-support solidaire d'un ressort de suspension qui porte un patin (appelé corps principal dans le brevet en question) contenant un transducteur magnétique d'écriture des informations du disque. Le patin vole au-dessus de celui-ci à une distance de quelques dixièmes de microns. La source de lumière polarisée n'est pas disposée sur la plate-forme.

La demande de brevet européen de numéro de publication 0 115 458 et dont le numéro de dépôt est 84400144.6 déposée le 23 janvier 1984 avec une priorité française du 25 janvier 1983, par la Compagnie Internationale pour l'Informatique CII HONEYWELL BULL, décrit un perfectionnement du dispositif décrit dans le brevet français ci-dessus mentionné, (le brevet US correspondant est le brevet 4,633,450) dans lequel l'écriture est effectuée par un transducteur magnétique et la lecture est effectuée par un dispositif optique de focalisation placé à l'intérieur d'un logement pratiqué à l'intérieur du patin (corps principal). Ce patin est du type Winchester à faible charge et est par exemple constitué par un catamaran comprenant au moins deux rails ou skis et une rainure disposée entre ceux-ci. L'optique de focalisation est placée à l'intérieur de l'un des deux rails. L'optique de focalisation est située à une distance du support d'informations supérieure ou égale à la hauteur de vol du patin par rapport au disque magnétique. Ainsi, du fait même des conditions de vol du patin au-dessus du disque magnétooptique, qui maintiennent la face de celui-ci qui est en regard du disque à une distance de ce dernier dont l'amplitude de fluctuation est inférieure à la profondeur de champ de l'optique de focalisation, on voit que, en disposant celle-ci d'une manière appropriée l'optique de focalisation à l'intérieur de ce patin, la focalisation de cette optique vis-à-vis du disque magnétooptique peut être rendue constante pendant tout le temps que dure le vol du patin au-dessus du disque magnétooptique. Cela permet d'éviter l'utilisation d'un dispositif d'asservissement de focalisation lourd et coûteux.

Dans la pratique du métier, on cherche à relire au moyen du dispositif optique de lecture, les informations écrites par le transducteur magnétique d'écriture aussitôt après que celles-ci aient été enregistrées. On améliore ainsi considérablement le temps d'accès aux informations écrites sur le disque magnétooptique, tout en se réservant la possibilité de réécrire des informations considérées comme erronées aussitôt après avoir décelé qu'elles le sont au moyen du dispositif optique de lecture. Ceci est très important pour l'écriture d'informations dans une mémoire magnétooptique où le taux d'erreurs brut est non négligeable et est estimé de l'ordre de $10^{-5}$ (une information erronée pour $10^5$ informations écrites). Cela nécessite, qu'en permanence, le pôle d'écriture du transducteur magnétique d'écriture et le spot lumineux soient en regard de la même piste. Or, la largeur des pistes étant de l'ordre de deux microns, et la largeur du spot étant de l'ordre du micron, il n'est pas possible de tolérer que, au cours des opérations d'écriture et de lecture, le spot lumineux se déplace par rapport au pôle d'écriture de plus d'un demi-micron, de part et d'autre du milieu de la piste que l'on est en train d'écrire et de lire, sous peine d'être en regard de la piste voisine de cette dernière.

L'inconvénient des dispositifs de lecture optique décrits dans le brevet et la demande de brevet ci-dessus mentionnés est que l'exigence de précision de positionnement du spot lumineux par rapport au pôle d'écriture ne peut être satisfaite. En effet, le patin est animé d'un mouvement de rotation (et également de translation) par rapport au faisceau lumineux (la source lumineuse étant placée à l'extérieur de la plate-forme), en raison du voile du disque et des irrégularités de surface qu'il présente. Le faisceau lumineux peut de la sorte se déplacer de quelques microns, voire quelques dizaines de microns par rapport au pôle d'écriture, et se trouver ainsi en regard d'une piste différente de celle en regard de laquelle se trouve le pôle d'écriture. Dans ces conditions, il est alors nécessaire de déplacer la plate-forme de telle sorte que le dispositif de lecture se trouve disposé en regard de la piste qui a été écrite par le transducteur magnétique. Le temps d'accès à ces informatons écrites s'en trouve d'autant augmenté.

La présente invention permet de remédier à cet inconvénient en asservissant la position du faisceau incident par rapport à une position de référence de telle sorte que la distance entre le pôle d'écriture du transducteur et le spot lumineux reste constante et égale à une valeur prédéterminée.

Selon l'invention, le dispositif de lecture optique et d'écriture magnétique d'informations sur un support d'enregistrement magnétooptique qui comprend :

- un transducteur d'écriture des informations sur le support disposé sur un patin volant au-dessus du support,
- une source de lumière émettant un faisceau de lumière polarisé sur la surface du support en un endroit déterminé de celui-ci dont l'interaction avec l'état magnétique du support en cet endroit produit une rotation du plan de polarisation de la lumière,
- des moyens optiques pour focaliser le faisceau incident sur la surface du support, dont la trace sur ce dernier forme un spot lumineux, et qui est réfléchi par le support puis transmis par ceux-ci à un élément séparateur séparant le faisceau incident du faisceau réfléchi,
- des moyens de détection de l'angle de rotation du plan de polarisation de la lumière délivrant un signal électrique dont la tension (ou courant) est fonction de la valeur de l'information située en cet endroit, est caractérisé en ce que, dans le but de maintenir constante la position relative du faisceau incident et du transducteur d'écriture par rapport à la piste écrite ce qui définit ainsi la position de référence du spot, il comprend :

- des moyens pour mesurer le déplacement du faisceau incident ($F_i$) dû au roulis et au tangage du patin par rapport à la position de référence, délivrant un signal électrique fonction de ce déplacement,
- des moyens de commande recevant ce signal et envoyant des signaux de commande fonction de ce déplacement à :
- des moyens de correction de la position du faisceau incident qui modifient la position de ce dernier en réponse au signal de commande de façon à ramener le faisceau incident dans la position de référence.

Dans une forme de réalisation préférée de l'invention, les moyens optiques de focalisation sont constitués par une lentille holographique, qui est par exemple fixée sur la partie supérieure du patin et fait un angle voisin de 45° avec la surface de cette partie (la partie supérieure du patin est la face de celui-ci qui est parallèle au support et n'est pas disposée en regard de ce dernier, la face disposée en regard de ce dernier étant appelée surface de vol).

Dans une autre forme de réalisation de l'invention, les Moyens de correction sont constitués par l'association de deux miroirs, par exemple de type galvanométrique, recevant chacun successivement le faisceau incident et respectivement mobiles autour d'un axe de rotation horizontal et d'un axe de rotation vertical, de manière à modifier la position du faisceau incident selon des directions parallèles à ces deux axes.

Dans une forme de réalisation préférée de l'invention, les Moyens pour mesurer le déplacement du faisceau incident sont constitués par l'association d'un miroir solidaire de la lentille holographique captant une partie du faisceau incident et sensible à son déplacement, un amplificateur optique du déplacement du faisceau incident détecté par le miroir, des moyens de focalisation de cette partie du faisceau incident sur une matrice de photodétecteurs qui détermine ainsi la position du faisceau incident par rapport à la position de référence.

D'autres caractéristiques et avantages de la présente invention apparaîtront dans la description suivante donnée à titre d'exemple non limitatif et en se référant aux figures annexées.

Sur ces dessins :

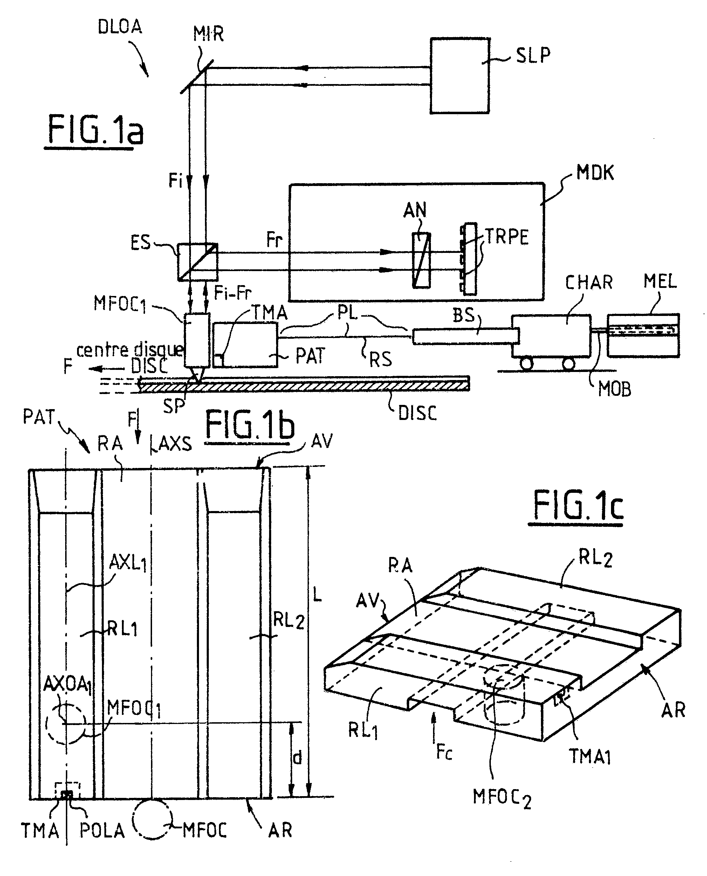

. La figure 1 composée des figures 1a et 1b et 1c montre un dispositif de lecture optique et d'écriture magnétique d'un support d'informations magnétooptique, selon l'art antérieur tel que décrit dans le brevet français cité.

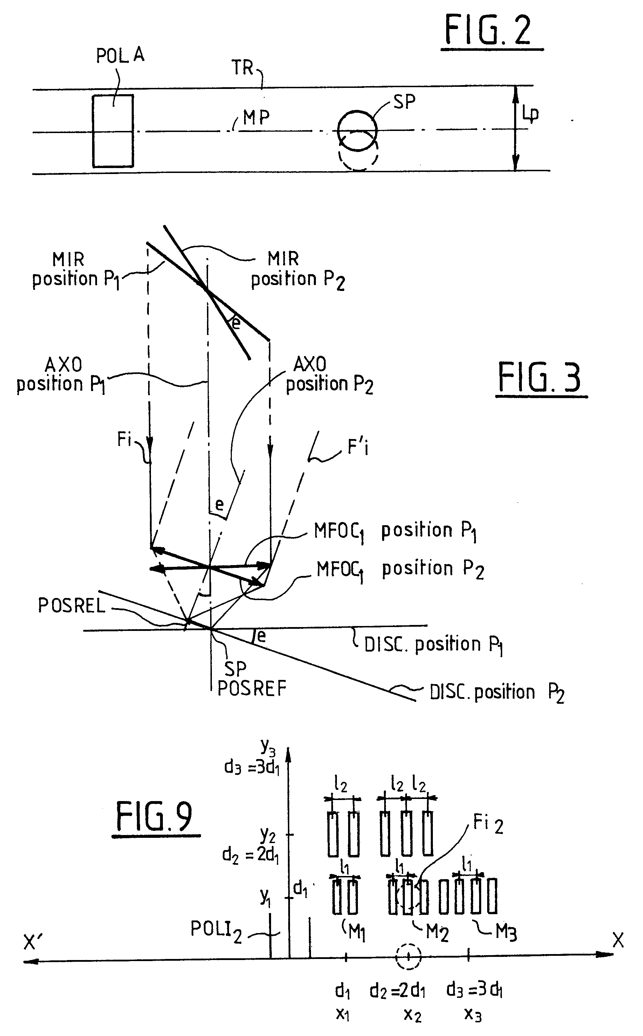

. La figure 2 montre les exigences que doit satisfaire le dispositif de lecture optique et d'écriture magnétique selon l'invention, en ce qui concerne le déplacement du spot lumineux par rapport au pôle d'écriture du transducteur magnétique d'écriture d'une part et au milieu d'une piste écrite, d'autre part.

. La figure 3 montre comment le faisceau lumineux incident peut subir une rotation ou une translation due à un mouvement de roulis et de tangage, entraînant son déplacement par rapport à une position de référence.

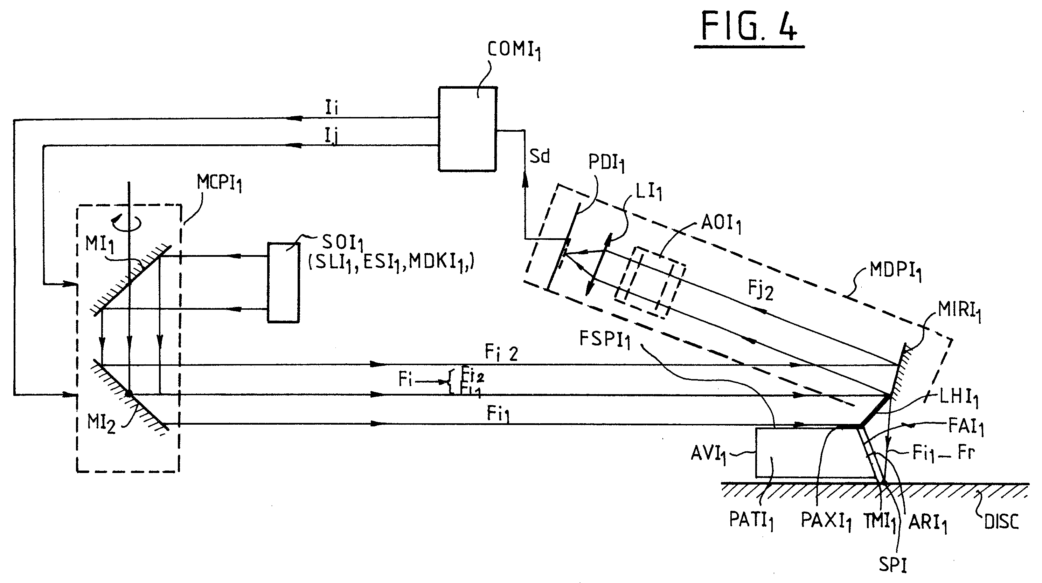

. La figure 4 est une vue de côté montrant une première forme de réalisation du dispositif de lecture optique et d'écriture magnétique d'informations sur un support d'enregistrement magnétooptique selon l'invention.

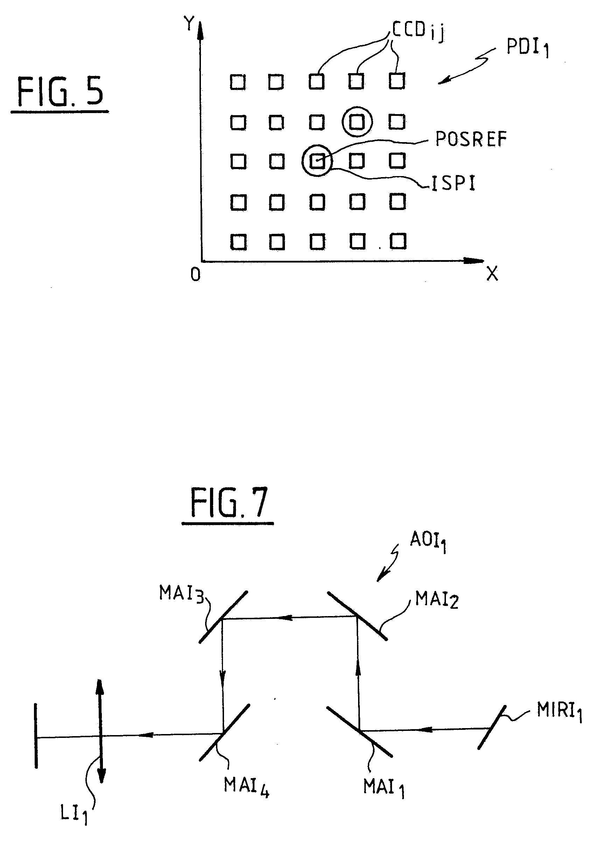

. La figure 5 illustre comment est détectée la position du spot par rapport à la position de référence, selon cette première forme de réalisation.

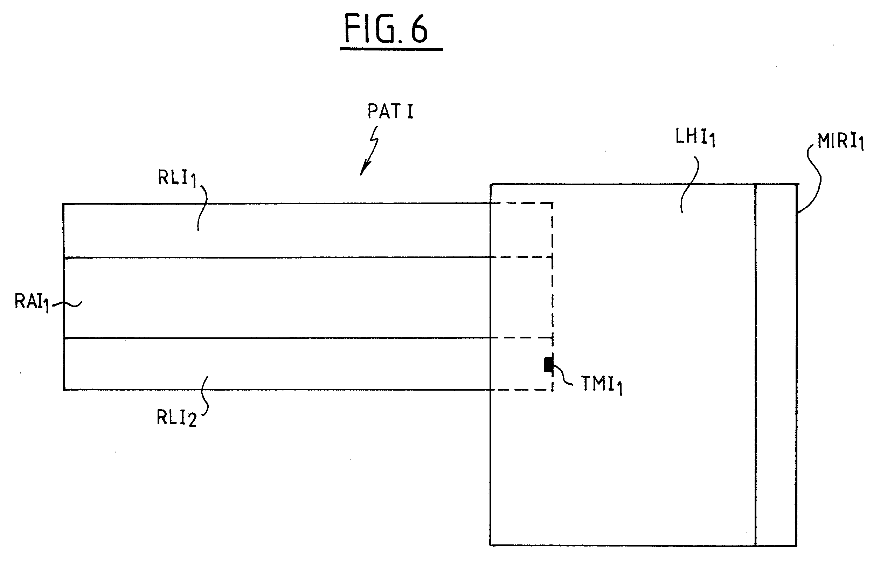

. La figure 6 est une vue partielle de dessus montrant la première forme de réalisation du dispositif de lecture optique et d'écriture magnétique selon l'invention.

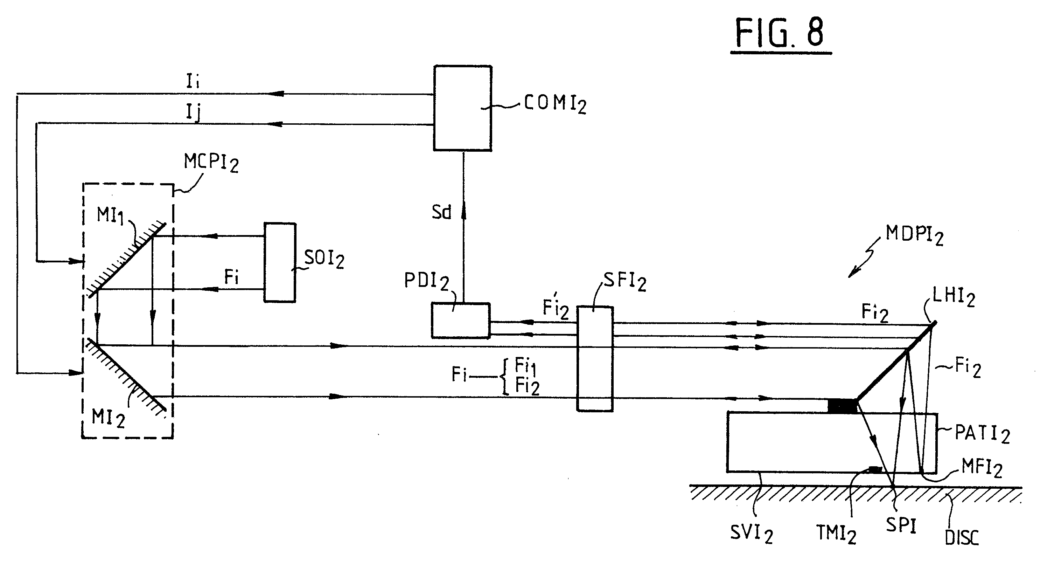

. La figure 7 montre une forme de réalisation préférée des Moyens pour mesurer le déplacement du faisceau incident par rapport à une position de référence, avec amplification optique de déplacement.

. La figure 8 montre, vue de côté, une seconde forme de réalisation du dispositif de lecture optique et d'écriture magnétique, selon l'invention.

. La figure 9 montre comment est détectée la position du spot lumineux par rapport à la position de référence, selon cette seconde forme de réalisation.

Pour mieux comprendre comment est constitué le dispositif de lecture optique et d'écriture magnétique selon l'invention, il est utile d'effectuer quelques rappels illustrés par les figures 1a, 1b, 1c montrant un dispositif de lecture optique selon l'Art Antérieur, tel que décrit soit dans le brevet français n° 2.514.913 précité soit dans la demande de brevet européen n° 84400144.6 précitée. Le dispositif de lecture optique DLOA selon l'Art Antérieur montré à la figure 1a et 1b comprend :

- la source de lumière polarisée (de préférence monochromatique) SLP émettant un faisceau de lumière incident $F_i$,
- le miroir MIR,
- l'élément séparateur ES,
- des moyens de focalisation MFOC du faisceau lumineux incident $F_i$ sur le disque magnétooptique DISC, lequel est réfléchi par ce dernier et devient le faisceau réfléchi $F_r$ : la trace du faisceau lumineux $F_i$ sur le disque DISC forme le spot lumineux SP,
- des moyens de détection MDK par "effet Kerr" des informations binaires enregistrées sur chaque piste du disque magnétooptique DISC.

La source de lumière SLP envoie le faisceau lumineux $F_i$ sur le disque magnétooptique DISC par l'intermédiaire successivement du miroir MIR, de l'élément séparateur ES, des moyens de focalisation MFOC (ceux-ci sont généralement constitués par une lentille focalisatrice). Le faisceau réfléchi $F_r$ est tel que son vecter champ électrique a subi une rotation $\pm \theta_k$ par effet Kerr (voir brevet 2.514.913) par rapport au vecteur champ électrique du faisceau incident $F_i$. Ce faisceau $F_r$ est envoyé à travers les moyens de focalisation MFOC et l'élément séparateur ES aux moyens de détection MDK. Ceux-ci comprennent, de manière connue, un analyseur de lumière AN associé à une pluralité de transducteurs photoélectroniques. L'élément analyseur AN a une direction priviligiée de propagation de la lumière faisant un angle donné avec le vecteur champ électrique du faisceau $F_i$. La puissance lumineuse recueillie par l'analyseur AN est transformée par les transducteurs photoélectroniques (eux-mêmes associés à des circuits électroniques amplificateurs non représentés à la figure 1a pour simplifier) en un signal électrique dont la tension (ou le courant) est fonction de la valeur des informations binaires enregistrées sur le disque DISC à l'emplacement où se trouve le spot lumineux SP.

Ainsi qu'il est indiqué dans le brevet français 2.514.913 précité, de préférence, la plupart des éléments du dispositif de lecture DLOA sont montés sur une plate-forme PL, à l'exception de la source de lumière polarisée SLP. Cette plate-forme PL comprend le bras support BS fixé par l'une de ses extrémités par exemple à un chariot mobile CHAR extérieur au disque DISC. Ce chariot mobile est lui-même solidaire de la partie mobile MOB d'un moteur électrodynamique linéaire MEL. L'autre extrémité du bras support BS est solidaire d'un ressort de suspension RS lequel porte un patin volant PAT. Ce patin comprend par exemple un transducteur électromagnétique TMA d'écriture des informations du disque DISC. La structure du patin volant PAT est connue. Elle est brièvement rappelée ci-dessous en référence aux figures 1b, 1c qui sont respectivement des vues de dessous et en perspective de ce patin.

A la figure 1b, le support d'informations, à savoir le disque DISC est supposé défiler dans le sens de la flèche F. Le patin PAT est de type catamaran, c'est-à-dire comprenant deux rails $RL_1$ et $RL_2$ séparés par une rainure RA. On appelle avant AV du patin PAT, la partie de celui-ci qui voit la première dans le temps défiler les informations devant elle, alors qu'on appelle arrière AR de la tête, la partie de celle-ci qui voit la dernière dans le temps défiler les informations devant elle. On appelle AXS l'axe de symétrie longitudinal du patin PAT (c'est-à-dire l'axe parallèle au sens de défilement F des informations).

Le patin PAT comprend, ainsi qu'il a été indiqué plus haut, un transducteur magnétique d'écriture TMA disposé à l'arrière AR de celui-ci, par exemple sur le rail $RL_1$. Le transducteur TMA a un pôle d'écriture POLA.

Dans le mode de réalisation décrit dans le brevet français 2.514.913 précité, les moyens de focalisation $MFOC_1$ sont disposés sur l'axe de symétrie AXS et à l'arrière du patin PAT. De préférence, le miroir MIR, disposé au-dessus des moyens $MFOC_1$, est solidaire du mouvement du patin (et donc, des moyens $MFOC_1$).

Dans la forme de réalisation préférée décrite dans la demande de brevet européenne précitée, les moyens optiques de focalisation $MFOC_2$ représentés en traits interrompus à la figure 1b et 1c sont disposés à l'intérieur d'un logement pratiqué dans le rail $RL_1$. L'axe de symétrie longitudinal des moyens de focalisation est confondu avec l'axe de symétrie longitudinal du transducteur magnétique d'écriture TMA lui-même confondu avec l'axe de symétrie longitudinal $AXL_1$ du rail $RL_1$ lui-même parallèle à l'axe de symétrie AXS.

La distance entre l'axe optique $AXOA_1$ des moyens de focalisation $MFOC_2$, perpendiculaire au plan du disque DISC et le pôle d'écriture POLA, à savoir d est de l'ordre de quelques dizièmes de millimètres, voire un millimètre.

La surface totale des rails RL et $RL_2$ constitue la surface de vol du patin PAT. La force due à la pression de l'air sur cette surface lorsque le disque DISC défile dans le sens de la flèche en regard du patin PAT, est équilibrée par une force de chargement, encore appelée charge $F_c$ de l'ordre d'une dizaire de grammes.

On considère la figure 2 qui illustre les exigences que doit satisfaire un dispositif de lecture optique et d'écriture magnétique d'informations sur un support magnétooptique dont la largeur de piste $L_p$ est de l'ordre de deux micromètres. Le spot lumineux SP dont le diamètre est de l'ordre du micron ne doit pas subir, de part et d'autre du milieu MP de la piste TR, de déplacement parasite supérieur à un demi-micron, sous peine de se trouver, au moins partiellement en regard d'une piste voisine. On a représenté sur cette figure le pôle d'écriture POLA du transducteur TMA.

Un tel dispositif est confronté aux deux problèmes suivants :

- en raison de la courbure relativement forte des pistes du disque, dû au faible diamètre de celles-ci (de l'ordre de quelques centimètres) on peut montrer par le calcul, que la distance entre le pôle d'écriture du transducteur magnétique d'écriture et le spot lumineux doit rester inférieure à une dizaine de microns pour que ces derniers restent disposés en regard de la même piste,
- par ailleurs, ainsi qu'il a été dit plus haut, le patin qui porte la lentille de focalisation, le miroir MIR et le transducteur magnétique d'écriture est soumis dans l'espace, à des mouvements soit de rotation soit de translation qui peuvent occasionner des déplacements du spot lumineux SP par rapport au milieu de la piste MP égaux ou supérieurs au demi-micron.

En effet, la source de lumière qui envoie le faisceau lumineux sur le miroir et la lentille focalisatrice est située à l'extérieur du patin portant celle-ci, ce qui rend possible tout mouvement relatif entre le faisceau incident $F_i$ et la lentille.

Si l'on désigne par POSREF la position relative du spot lumineux SP et du pôle d'écriture POLA dite de référence, pour laquelle ce spot lumineux est correctement centré sur le milieu MP d'une piste TR que le pôle d'écriture centré sur cette piste du transducteur magnétique d'écriture est en train d'écrire, aussi bien le mouvement de rotation que le mouvement de translation du patin se traduisent par un déplacement p du spot lumineux SP par rapport à cette position de référence POSREF. On peut établir que le déplacement p le plus important est dû au mouvement de rotation dû au voile du disque (voile de l'ordre de la centaine de micromètres) ou aux irrégularités de surface du disque.

Ceci est illustré à la figure 3 qui montre le déplacement p de ce spot résultant d'un tel mouvement de rotation.

A la figure 3 on suppose que le miroir MIR et la lentille de focalisation MFOC ont subi une rotation d'angle e par rapport au faisceau incident $F_i$ qui se traduit par un déplacement du spot SP de la position POSREF à une position POSREL, la distance entre POSREF et POSREL étant égale à p.

On a supposé à la figure 3 que la position relative du patin et donc de la lentille MFOC du miroir MIR par rapport au disque DISC reste toujours identique à elle-même, puisque, en volant au-dessus du disque, le patin suit les mouvements de la surface du disque, en restant en permanence parallèle à celle-ci.

Au point où se trouve le spot SP, défini par la position de référence POSREF, en l'absence de voile, le disque DISC, le miroir MIR, la lentille focalisatrice $MFOC_1$ et son axe optique AXO occupent la position $P_1$.

En présence de voile du disque, le disque DISC, le miroir MIR, la lentille $MFOC_1$, l'axe optique AXO subissent une rotation d'angle e par rapport à la position $P_1$. Cette nouvelle position est définie par $P_2$. L'angle e, de l'ordre de une à plusieurs, voire quelques dizaines de minutes d'angle, est représenté très agrandi à la figure 3 pour rendre plus claire celle-ci.

L'angle de rotation étant faible, on estime, en première approximation que le faisceau incident $F_1$ (position $P_1$) qui est normal à la lentille et a pour axe de symétrie l'axe optique AXO, devient dans la position $P_2$ le faisceau $F'_i$, qui reste normal à la lentille MFOC et a toujours pour axe de symétrie AXO. Ce faisceau $F'_i$ est focalisé sur le disque DISC dans sa position $P_2$, et se trouve à l'intersection de ce dernier et l'axe optique AXO. Le spot SP occupe alors la position POSREL.

Dans ce cas, si le diamètre de la lentille est désigné par d, et la distance focale par f, le déplacement p du spot SPI par rapport à la position de référence POSREF est donné par l'expression :

$$p = f\,\mathrm{tg}(e) \quad (1)$$

Si l'on veut que p reste inférieur au demi-micromètre, f étant supposé égal à 2 mm, on trouve :

$$e < 0,014° \text{ soit } e < 51"$$

On constate qu'il suffit d'une très faible rotation de la lentille pour provoquer un déplacement du spot lumineux de l'ordre du demi-micromètre ce qui est suffisant pour perturber les opérations de lecture accomplies par le dispositif optique de lecture, aussitôt après que les informations ont été écrites par le transducteur magnétique d'écriture.

Le dispositif d'écriture magnétique et de lecture optique selon l'invention se propose de maintenir le spot de lecture SPI dans la position de référence, telle que les conditions de lecture des informations de la piste qui viennent d'être écrites par le transducteur magnétique d'écriture soient optimales, le spot lumineux SPI restant en permanence disposé en regard de la même piste que le pôle d'écriture.

La position de référence est définie expérimentalement une fois pour toutes : on déplace le pôle d'écriture du transducteur jusqu'à ce qu'il soit parfaitement centré sur une piste, on effectue les opérations d'écriture, puis on lit les informations au moyen du spot SPI et du dispositif optoélectronique de lecture, le pôle d'écriture étant maintenu parfaitement centré sur la piste TR. Lorsque les photodétecteurs (moyens MDKI) détectent un signal d'amplitude maximum, le spot SPI et le transducteur d'écriture TMI occupent la position de référence.

On maintient le spot SPI dans sa position de référence POSREF en détectant en permanence la position du spot SPI par rapport à celle-ci et en modifiant la position du faisceau incident $F_i$ en fonction de la position détectée, de telle façon que le spot SPI vienne se replacer dans la position de référence POSREF. En d'autres termes, on commande la position du faisceau incident en fonction de la position détectée du spot par un asservissement.

Le dispositif d'écriture magnétique et de lecture optique selon l'invention dont une première forme de réalisation est présentée à la figure 4 et une seconde à la figure 8, fonctionne selon les modalités ci-dessus définies.

On considère la figure 4.

Le dispositif selon l'invention montré sur cette figure comprend :

- le système optique $SOI_1$ formé des éléments SLPI, ESI, MDKI identique à l'ensemble formé par les éléments SLP, ES MDK du dispositif selon l'Art Antérieur montré à la figure 1a, et non représenté pour simplifier la figure 4,
- les deux miroirs $MI_1$ et $MI_2$ mobiles en rotation autour de deux axes perpendiculaires l'un à l'autre, le miroir $MI_1$ étant mobile autour d'un axe vertical, alors que le miroir $MI_2$ est mobile autour d'un axe horizontal, les moyens séparateurs ESI étant disposés entre la source SLPI et le miroir $MI_1$.
- le patin $PATI_1$ qui comprend le transducteur magnétique d'écriture $TMI_1$ et les moyens de focalisation constitués par la lentille de focalisation $LHI_1$ qui de préférence est une lentille holographique,
- les moyens de détection $MDPI_1$ de la position du faisceau SPI par rapport à la position de référence POSREF, ces moyens délivrant un signal électrique fonction de la position réelle POSREL qu'occupe le faisceau par rapport à la position de référence,
- des moyens de commande $COMI_1$ recevent ce signal et envoyant un signal de commande fonction de celui-ci à l'ensemble constitué par les deux miroirs $MI_1$ et $MI_2$ de telle façon que ceux-ci modifient la position du faisceau incident $F_i$ en réponse au signal de commande de façon à ce que le spot SPI revienne occuper la position de référence.

On peut donc dire que l'ensemble constitué par les deux miroirs $MI_1$ et $MI_2$ constitue des moyens de correction de la position du faisceau incident, moyens qui seront désignés par $MCPI_1$.

Les miroirs $MI_1$ et $MI_2$ sont constitués de manière identique. Ce sont par exemple des miroirs de type galvanométrique, tels ceux utilisés dans les galvanomètres que l'on trouve communément dans la pratique.

La lentille holographique $LHI_1$ a la forme d'un rectangle plat dont les dimensions sont par exemple une longueur de 6 mm, une largeur de 4 mm et une épaisseur d' 1 mm.

La lentille holographique est utilisée de préférence à un ensemble formé par un association d'un miroir et d'une lentille focalisatrice conventionnelle telle que le miroir MIR et la lentille MFOC de la figure 1a. En effet, les dimensions, la légèreté et la faible hauteur de vol du patin (inférieure au micromètre) pose des problèmes de compatibilité avec la taille, la masse et le tirage optique des lentilles focalisatrices conventionnelles.

Le raisonnement effectué ci-dessus, en référence à la figure 3, pour un miroir et une lentille conventionnelle, relatif aux effets d'une rotation de ceux-ci par rapport au faisceau incident, reste valable pour une lentille holographique.

L'utilisation de lentilles holographiques pour la lecture optique d'informations (par exemple, les informations contenues sur des disques optiques ou des disques magnétooptiques) est décrite par exemple dans la demande de brevet européenne 86301994.9 (N° de publication 0195657) déposée par la Société FUJITSU, désignant notamment la France, et dans le brevet US 4,626,679.

La lentille holographique $LHI_1$ est montée par l'intermédiaire de pattes de fixation sur la face supérieure $FSPI_1$ du patin $PATI_1$.

La lentille $LHI_1$ fait un angle $\gamma$ de l'ordre de 45° avec la face supérieure $FSPI_1$ du patin $PATI_1$.

A noter par exemple, que la lentille $LHI_1$ peut être une lentille produite par "le Centre Suisse d'Electronique et de Microtechnique S.A" dont le siège est à Neuchâtel en Suisse.

Le patin $PATI_1$ a la même structure générale que la patin PATI du dispositif selon l'Art Antérieur montré aux figures 1a, 1b, 1c, Il a donc une structure en forme de catamaran comportant deux rails $RLI_1$ et $RLI_2$ séparés par une rainure $RAI_1$, tels qu'on peut les voir à la figure 6. L'avant et l'arrière du patin sont désignés respectivement par $AVI_1$ et $ARI_1$.

Par rapport au patin $PATI_1$ des figures 1a à 1c, le patin $PATI_1$ se distingue de ce dernier par la structure de sa partie arrière $ARI_1$.

En effet la face arrière $FAI_1$ de ce dernier qui comprend le transducteur $TMI_1$ est inclinée d'un angle $\alpha$ par rapport à la normale au plan du disque DISC.

Le transducteur $TMI_1$ est un transducteur intégré en couches minces d'un type parfaitement connu, par exemple décrit dans la demande de brevet français N° 84.20025 (demande de brevet US correspondante : 813,236 déposée le 28 décembre 1984) déposé le 28 décembre 1984 par la Compagnie Internationale pour l'Informatique CII HONEYWELL BULL ou encore fabriqué par la Société Américaine READ RITE dont le siège est dans l'Etat de Californie. Le plan des couches minces du transducteur $TMI_1$ est lui aussi incliné d'un angle $\alpha$ par rapport à la normale au plan du disque DISC.

La hauteur, la largeur et la longueur du patin $PATI_1$ sont déterminées en fonction des dimensions des différents éléments qui le constituent, et notamment des caractéristiques optiques de la lentille $LHI_1$ ainsi que de ses dimensions.

Les dimensions et la masse de la lentille holographique $LHI_1$ sont tout à fait compatibles avec un vol

stable du patin PATI$_1$, puisque sa masse est de l'ordre de quelques centièmes de grammes, alors que la force de chargement du patin PATI$_1$ est de l'ordre de la dizaine de grammes.

Les moyens MDPI$_1$ de détection de la position du spot SPI par rapport à la position de référence POSREF comprennent, ainsi qu'on peut le voir à la figure 4 :

- le miroir MIRI$_1$,
- l'amplificateur optique de déplacement AOI$_1$,
- la lentille LI$_1$,
- un ensemble matriciel de photodétecteurs PDI$_1$.

Le miroir MIRI$_1$ est solidaire de la lentille holographique LHI$_1$, et par suite du patin PATI$_1$. Il subit donc les mêmes mouvements que ce dernier. Il est représenté volontairement surdimensionné à la figure 4 et à la figure 6, de manière à rendre plus aisée la compréhension de la figure et le mode de fonctionnement du dispositif selon l'invention. De la sorte, le miroir MIRI$_1$ ne capte qu'une très faible partie du faisceau incident F$_1$, à savoir F$_{j2}$ (environ 1 % de la puissance lumineuse du faisceau F$_i$) alors que la lentille holographique LHI$_1$ capte la plus grande partie du faisceau F$_i$, à savoir F$_{i1}$ (soit environ 99 % de la puissance lumineuse du faisceau). Il est donc clair que aussi bien le faisceau F$_{i1}$ que le faisceau F$_{j2}$ subissent du fait des mouvements de rotation du patin le même déplacement relatif par rapport à l'ensemble optique l'un que l'autre.

L'amplificateur optique AOI$_1$ est représenté à la figure 7. Il comprend quatre miroirs MAI$_1$, MAI$_2$, MAI$_3$, MAI$_4$. Les deux miroirs MAI$_1$, et MAI$_2$ sont parallèles l'un à l'autre alors que les deux miroirs MAI$_3$ et MAI$_4$ sont parallèles l'un par rapport à l'autre. Les deux miroirs MAI$_2$ et MAI$_3$ sont disposés à 90° l'un de l'autre, ainsi que les deux miroirs MAI$_1$ et MAI$_4$. Le faisceau F$_{j2}$ réfléchi par le miroir MIRI$_1$ arrive sur le miroir MAI$_1$ avec une incidence voisine de 45°. Il se réfléchit sur ce dernier et arrive sur le miroir MAI$_2$ avec une incidence de 45°, et ainsi de suite, pour être réfléchi par le miroir MAI$_4$ et être focalisé par la lentille LI$_1$ sur l'ensemble matriciel de photodétecteurs PDI$_1$. L'amplificateur optique multiplie, par un facteur k qui est un nombre entier, le déplacement du faisceau F$_{j2}$ qu'il reçoit. Avec quatre miroirs, on a k = 16.

L'ensemble matriciel de photodétecteurs PDI$_1$ comprend une pluralité de photodétecteurs CCD$_{ij}$ disposés suivant les lignes et les colonnes d'une matrice, de préférence carrée. Cette matrice est représentée à la figure 5 par référence à un système d'axes orthogonaux OX et OY. Cette matrice PDI$_1$ comprend donc n lignes et n colonnes, n étant représenté égal à 5 à la figure 5. Les éléments photodétecteurs sont identiques entre eux et sont par exemple des éléments de type CCD commercialisés par la Société Fairchild, caméras et instruments France (121, avenue d'Italie, 75013 Paris). Ces dispositifs CCD cont désormais bien connus, et sont par exemple décrits dans les notices techniques de la même Société Fairchild et par exemple dans la revue Microsystème de Septembre 81 aux pages 89 à 197.

Ainsi qu'on l'a vu plus haut, le faisceau F$_{j2}$ est focalisé par la lentille LI$_1$ sur la matric PDI$_1$. La trace de ce faisceau lumineux sur cette matrice est un spot lumineux ISPI. Le déplacement suivant les axes OX d'une part, et OY d'autre part de ce spot ISPI dépend selon une fonction connue du facteur k et du déplacement suivant OX et OY du spot lumineux SPI. Le spot ISPI a une surface de l'ordre de celle d'un photodétecteur CCD$_{ij}$.

La position de référence pour le spot lumineux ISPI correspond à l'emplacement d'un photodétecteur CCD$_{ij}$ déterminé. Cet emplacement est déterminé expérimentalement en même temps que la position POSREF.

Le fonctionnement détaillé du dispositif selon l'invention montré aux figures 4, 5, 6, 7 est le suivant :

- le système optique SOI$_1$ envoie un faisceau de lumière polarisée. Ce faisceau après s'être réfléchi sur les miroirs MI$_1$ et MI$_2$, appelé faisceau incident F$_i$, est envoyé vers la lentille holographique LHI$_1$ et le miroir MIRI. La plus grande partie de ce faisceau, à savoir F$_{i1}$ est interceptée par la lentille holographique LHI$_1$ et focalisée sur le disque DISC où elle forme le spot SPI. Le faisceau F$_{i1}$ est réfléchi par le milieu magnétooptique du disque DISC et devient le faisceau réfléchi F$_r$. Celui-ci retraverse la lentille holographique LHI$_1$ et emprunte le même chemin, en sens inverse, que le faisceau incident F$_{i1}$. Ce faisceau réfléchi F$_r$ est détecté et analysé par le système optique SOI$_1$ de la manière qui est décrite plus haut en relation avec la description de la figure 1a. On détermine ainsi la valeur des informations enregistrées sur le disque DISC.

Ainsi qu'il l'a été indiqué plus haut, le spot lumineux SPI subit un déplacement, suivant un axe OX et suivant un axe OY perpendiculaire à OX, par rapport à une position de référence POSREF, en raison des phénomènes de rotation du patin PATI$_1$.

La partie du faisceau incident F$_{i2}$ qui est réfléchie par le miroir MIRI$_1$, passe à travers l'amplificateur AOI$_1$ qui multiplie par le coefficient entier k la déviation suivant OX et OY subie par le spot lumineux SPI. Elle est focalisée par la lentille LI$_1$ sur la matrice de photodétecteurs PDI$_1$ sous forme du spot lumineux ISPI qui vient en coincidence avec au moins l'un des photodétecteurs de cette matrice. Ce photodétecteur émet par conséquent un signal électrique qui est envoyé au dispositif de commande COMI$_2$. Ce dernier connaît donc la valeur de i et j, et par suite la valeur des déviations subies par le spot ISPI (et par conséquent la valeur des déviations subies par le spot SPI) suivant une direction parallèle à OX et suivant une direction parallèle à OY.

Le dispositif de commande COMI$_1$ connaissant donc la position réelle du spot ISPI (et par conséquent celle du spot SPI) envoie respectivement un premier courant de commandes I$_i$ au miroir galvanométrique MI$_1$ et un second courant de commandes I$_j$ au second miroir MI$_2$.

Chacun des deux miroir MI$_1$ et MI$_2$ subit donc, autour de son axe, une rotaton, ce qui a pour effet de déplacer le faisceau incident F$_i$ à la fois suivant une direction parallèle à OX et suivant une direction parallèle à OY, et par suite le faisceau F$_{i1}$ et le faisceau F$_{i2}$ de telle façon que le spot lumineux ISPI vienne en coincidence avec le photodétecteur CCD$_{ij}$

de référence, le spot lumineux SPI venant alors occuper la position de référence POSREF.

Le dispositif de commandes COMI$_1$ est donc constitué par exemple par un microprocesseur qui comprend une table de correspondance entre les valeurs de i, j et les courants I$_i$ et I$_j$ et un algorithme extrêmement simple d'asservissement des deux miroirs MI$_2$ et MI$_2$ sur la position de référence occupée par le spot lumineux ISPI.

On considère désormais la figure 8 qui présente un second mode de réalisation de l'invention. Celui-ci comprend :
- un système optique SOI$_2$,
- des moyens de commande de position du faisceau incident F$_i$, désignés par MCPI$_2$, et composés des miroirs MI$_1$ et MI$_2$,
- des moyens pour détecter la position du faisceau du spot lumineux SPI par rapport au pôle d'écriture du transducteur magnétique d'écriture TMI$_2$, désigné par MDPI$_2$,
- le patin PATI$_2$ qui comprend le transducteur magnétique TMI$_2$ et la lentille holographique LHI$_2$,
- des moyens de commandes COMI$_2$,

Les éléments constitutifs suivants de ce second mode de réalisation, à savoir, le système optique SOI$_2$, les moyens de commandes de position MCPI$_2$, le patin PATI$_2$, les moyens de détection de position MDPI$_2$, ainsi que les moyens de commandes COMI$_2$ ont la même fonction que les éléments constitutifs SOI$_1$, MCPI$_1$, PATI$_1$, MDPI$_1$ et COMI$_2$ du premier mode de réalisation du dispositif selon l'invention.

Par ailleurs, les éléments constitutifs SOI$_2$, MCPI$_2$, COMI$_2$ ont une structure analogue aux éléments correspondants du premier mode de réalisation, à savoir SOI$_1$, MCPI$_1$, COMI$_1$.

Le patin PATI$_2$ est de forme parallélépipédique classique (voir par exemple figure 1b) mais est transparent à la lumière. Le transducteur d'écriture TMI$_2$ est réalisé en couches minces et est déposé à plat sur la surface de vol SVI$_2$ du patin. Il est par exemple du type décrit dans le brevet français 2.559.294 déposé le 3 février 1984. (brevet correspondant US n° 4 731 157).

Les moyens de détection de la position du spot SPI par rapport aux pôles d'écriture du transducteur TMI$_2$, comprennent :
- un séparateur de faisceau SFI$_2$,
- des motifs MFI$_2$ gravés sur la surface de vol SVI$_2$ du patin PATI$_2$, permettant de détecter la position du spot SPI par rapport au pôle d'écriture du transducteur TMI$_2$,
- un photodétecteur PDI$_2$.

Le séparateur de faisceau SFI$_2$ sépare le faisceau incident F$_i$ émis par le système optique SOI$_2$, en deux faisceaux distincts F$_{i1}$ et F$_{i2}$.

Le faisceau F$_{i1}$ transporte une puissance lumineuse égale à environ 99 % de la puissance lumineuse du faisceau incident F$_i$ et est utilisé pour lire les informations enregistrées sur le support d'enregistrement DISC. Son rôle est donc équivalent à celui du faisceau de même dénomination utilisé dans le premier mode de réalisation du dispositif selon l'invention.

Le faisceau F$_{i2}$ qui transporte environ 1 % de la puissance lumineuse du faisceau incident F$_i$ est utilisé pour mesurer la position du spot SPI produit par le faisceau F$_{i1}$ sur le support DISC. En effet, la position des deux faisceaux F$_{i1}$ et F$_{i2}$ l'un par rapport à l'autre est parfaitement connue et reste invariable dans le temps, du fait de la constitution du séparateur de faisceau SFI$_2$. On peut dire que la position relative des deux faisceaux F$_{i1}$ et F$_{i2}$ est connue et parfaitement déterminée, par construction.

Le faisceau F$_{i2}$ passe donc à travers la lentille holographique LHI$_2$ et est focalisé sur les motifs MFI$_2$ qui sont gravés sur la surface de vol SVI$_2$ du patin PATI$_2$.

Ces motifs MFI$_2$ sont par exemple constitués par de minces barrettes de fernickel Fe-Ni disposées sur la surface de vol SVI$_2$ à proximité du transducteur magnétique d'écriture TMI$_2$. Ces motifs sont gravés suivant un code déterminé qui permet de repérer la position du faisceau F$_{i2}$ et, par conséquent, du spot lumineux SPI (ce dernier étant à distance constante du faisceau F$_{i2}$) par rapport au pôle d'écriture POLI$_2$ du transducteur TMI$_2$. Ces motifs sont codés différemment suivant deux axes perpendiculaires OX et OY.

Un exemple de réalisation de motifs de MFI$_2$ est donné à la figure 9.

On considère tout d'abord le codage en abcisse. Pour des abcisses x$_1$, x$_2$, x$_3$, x$_i$, ...,x$_n$ correspondant respectivement à des distances d$_1$, d$_2$, d$_3$, d$_i$, ..., d$_n$ du faisceau F$_{i2}$ par rapport au pôle d'écriture POLI$_2$, les motifs correspondants seront désignés par M$_1$, M$_2$, M$_3$, M$_i$, ..., M$_n$, le nombre respectif de barettesde ces motifs étant par exemple respectivement de 2, 3, 4,..., n + 1. On a par exemple d$_2$ = 2d$_1$, d$_3$ = 3d$_1$, etc.

Le motif M$_1$ comprend donc deux barrettes distinctes dont l'écartement est égal à 1$_1$. Le motif M$_2$ comprend donc trois barrettes dont l'écartement entre deux barrettes successives est également 1$_1$, Il en est de même pour les quartre barrettes constituant le motif M$_3$ qui sont séparées les unes des autres par un écartement 1$_1$.

On considère maintenant le codage des motifs en ordonnée suivant un axe OY. Pour une même abcisse x$_i$, le nombre de motifs reste le même quelle que soit la valeur de y. Seul l'écartement entre les motifs varie. Pour des ordonnées y$_1$, y$_2$, y$_3$, ..., y$_j$, y$_n$ l'écartement entre les barrettes qui constituent les motifs est respectivement 1$_1$, 1$_2$, 1$_3$, ... , 1$_j$, , 1$_n$. Les abcisses y$_1$, y$_2$, y$_3$ correspondent par exemple, à des distances en ordonnée du faisceau F$_{i2}$ par rapport au pôle d'écriture POLI$_2$ égales respectivement à d$_1$, d$_2$, d$_3$, ..., d$_i$, , d$_n$ et l'on a par exemple d$_2$ = 2d$_1$, d$_3$ = 3d$_1$, etc.

Ainsi, en résumé, le codage en abcisse est indiqué par le nombre de barrettes, alors que le codage en ordonnée est indiqué par l'écartement entre les barrettes.

La dimension du spot produit par le faisceau F$_{i2}$ sur les motifs, est de l'ordre de grandeur d'une barrette.

Le photodétecteur PDI$_2$ peut par exemple être constitué par un détecteur du même type que ceux utilisés dans le premier mode de réalisation du dispositif selon l'invention.

Le fonctionnement des moyens de détection de position $MDPI_2$ est le suivant, le faisceau $F_{i2}$ produit par le séparateur de faisceau $SFI_2$ vient couvrir les motifs $M_1$, $M_2$, $M_3$, etc. On déplace ce faisceau $F_{i2}$ de telle manière qu'il balaie une surface carrée ayant un côté égal à $d_1$. Le signal recueilli aux bornes du photodétecteur $PDI_2$ comporte donc un nombre d'impulsions égal au nombre de barrettes lues pour le motif $M_i$ éclairé par le faisceau $F_{i2}$, le nombre de ces impulsions indiquant l'abcisse $x_j$ du faisceau, alors que la fréquence du signal ainsi obtenu (ou la période) indiquera l'ordonnée $y_j$ de ce même faisceau.

Le signal ainsi recueilli aux bornes du photodétecteur $PDI_2$ est envoyé aux moyens de commandes $COMI_2$ où il est décodé, ces moyens de commande envoyant alors des courants de commandes $l_i$ et $l_j$ au deux miroirs galvanométriques $MI_1$ $MI_2$ de manière que le faisceau $F_{i2}$ vienne occuper une position de référence pour laquelle par exemple y sera nul et x aura une valeur déterminée (indiquée, par exemple par $x_2$ à la figure 9).

**Revendications**

1. Dispositif asservi de lecture optique et d'écriture magnétique d'informations sur un support d'enregistrement magnétooptique (DISC) qui comprend :

- un transducteur ($TMI_1$) d'écriture des informations sur le support disposé sur un patin ($PATI_1$) volant au-dessus de support,
- une source de lumière ($SLI_1$) émettant un faisceau incident de lumière polarisée sur la surface du support en un endroit déterminé de celui-ci dont l'interaction avec l'état magnétique du support en cet endroit produit une rotation du plan de polarisation de la lumière,
- des moyens optiques ($MFOCI_1$) pour focaliser le faisceau incident ($F_i$) sur la surface du support, dont la trace sur ce dernier forme un spot lumineux (SPI), et qui est réfléchi par le support puis transmis par ceux-ci à un élément séparateur séparant le faisceau incident du faisceau réfléchi,
- des moyens de détection ($MDKI_1$) de l'angle de rotation du plan de polarisation de la lumière délivrant un signal électrique dont la tension (ou courant) est fonction de la valeur de l'information située en cet endroit,

caractérisé en ce que, dans le but de maintenir constante la position relative du transducteur d'écriture ($TMI_1$) et du faisceau incident ($F_{i1}$) par rapport à la piste écrite (TR), ce qui définit ainsi une position de référence (POSREF) du spot (SPI), il comprend :

- des moyens ($MDPI_1$) pour mesurer le déplacement du faisceau incident ($F_{i1}$) dû au roulis et au tangage du patin, par rapport à la position de référence (POSREF), délivrant un signal électrique ($S_d$) fonction de ce déplacement,
- des moyens de commande ($COMI_1$) recevant ce signal et envoyant des signaux de commande ($l_i$, $l_j$) fonction de ce déplacement à :

- des moyens de correction ($MCPI_1$) de la position du faisceau incident qui modifient la position de ce dernier en réponse au signal de commande de façon à ramener le faisceau incident ($F_{i1}$) dans la position de référence (POSREF).

2. Dispositif suivant la revendication 1, caractérisé en ce que les Moyens de correction ($MCPI_1$) sont constitués par l'association de deux miroirs ($MI_1$, $MI_2$) recevant successivement le faisceau incident, respectivement mobiles autour d'un axe de rotaton vertical et horizontal, de manière à modifier la position du faisceau incident selon des directions parellèles à ces deux axes.

3. Dispositif selon l'une quelconque des revendications 1 ou 2, caractérisé en ce que les moyens de focalisations sont constitués par une lentille holographique ($LHI_1$) disposée sur la partie supérieure du patin ($PATI_1$), en faisant un angle $\gamma$ avec la surface de cette partie.

4. Dispositif selon la revendication 3 caractérisé en ce que les moyens pour mesurer le déplacement du faisceau incident sont constitués par l'association d'un miroir ($MIRI_1$) solidaire de la lentille holographique, captant une partie du faisceau incident ($F_{i2}$) et sensible à son déplacement, un amplificateur optique du déplacement du faisceau incident captée par le miroir, des moyens de focalisation de cette partie du faisceau incident ($F_{i2}$) captée par le miroir sur une matrice de photodétecteurs qui détermine la position du faisceau incident ($F_{i1}$) par rapport à la position de référence (POSREF).

5. Dispositif selon l'une quelconque des revendications 1, 2, 3 caractérisé en ce que les moyens pour mesurer le déplacement du faisceau sont constitués par :

- un séparateur de faisceau ($SFI_2$),
- des motifs codés ($MFI_2$) gravés sur la surface de vol ($SVI_2$) du patin ($PATI_2$) permettant de détecter la position du spot (SPI) par rapport au pôle d'écriture du transducteur ($TMI_2$),
- au moins un photodétecteur ($PDI_2$),

le séparateur de faisceau séparant le faisceau incident $F_i$ en deux faisceaux distincts ($F_{i1}$, $F_{i2}$) dont le premier ($F_{i1}$) est utilisé pour lire les informations écrites sur le support et le second ($F_{i2}$) qui est focalisé par les moyens de focalisation sur les dits motifs, est réfléchi par ces derniers et renvoyé par ces moyens sur le photodétecteur qui émet un signal permettant de repérer la position de ce second faisceau ($F_{i2}$) et par suite du spot (SPI) par rapport au pôle d'écriture ($POLI_2$) du transducteur.

FIG.1a

FIG.1b

FIG.1c

FIG.2

FIG.3

FIG.9

FIG. 4

EP 0 311 485 A1

## FIG. 5

## FIG. 7

# FIG.6

PAT I

RLI₁

RAI₁

RLI₂

LHI₁

MIRI₁

TMI₁

EP 0 311 485 A1

## FIG. 8

EP 0 311 485 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 11, no. 219 (P-596)[2666], 16 juillet 1987, page 108 P 596; & JP-A-62 36 760 (NIPPON TELEGR. & TELEPH. CORP.) 17-02-1987 * Résumé * | 1,4 | G 11 B  11/10 |
| | --- | | |
| A | PATENT ABSTRACTS OF JAPAN, vol. 11, no. 181 (P-585)[2628], 11 juin 1987, page 43 P 585; & JP-A-62 9516 (NIPPON TELEGR. & TELEPH. CORP.) 17-01-1987 * Résumé * | 1,4 | |
| | --- | | |
| A | PATENT ABSTRACTS OF JAPAN, vol. 11, no. 253 (P-606)[2700], 18 août 1987, page 165 P 606; & JP-A-62 60 148 (OLYMPUS OPTICAL CO. LTD) 16-03-1987 * Résumé * | 1 | |
| | --- | | |
| A | PATENT ABSTRACTS OF JAPAN, vol. 11, no. 107 (P-563)[2554], 4 avril 1987, page 124 P 563; & JP-A-61 255 547 (MATSUSHITA ELECTRIC IND. CO. LTD) 13-11-1986 * Résumé * | 1,5 | DOMAINES TECHNIQUES RECHERCHES (Int. Cl.4)  G 11 B |

Le présent rapport a été établi pour toutes les revendications

| Lieu de la recherche | Date d'achèvement de la recherche | Examinateur |
|---|---|---|
| LA HAYE | 10-01-1989 | FUX J. |